# FASCICULE DE BREVET EUROPEEN

(11) **EP 4 013 684 B1**
(45) Date de publication et mention de la délivrance du brevet: **07.06.2023**
(21) Numéro de dépôt: 20772359.4
(22) Date de dépôt: 13.08.2020
(51) Int. Cl.: B64F 1/36, G06Q 10/08

(54) **INSTALLATION DE CONTRÔLE DE BAGAGES**
EINRICHTUNG ZUR GEPÄCKÜBERPRÜFUNG
BAGGAGE CHECK INSTALLATION

(30) Priorité: 16.08.2019 FR 1909231
(43) Date de publication de la demande: 22.06.2022
(73) Titulaire: Selfcair UK Ltd, Marshland St. James Wisbech Cambridgeshire PE14 8JT (GB)
(72) Inventeur: SAFIR, André, 92500 RUEIL-MALMAISON (FR)
(74) Mandataire: Gauchet, Fabien Roland
(86) Numéro de dépôt international: PCT/FR2020/051463
(87) Numéro de publication internationale: WO 2021/032921

(56) Documents cités:
- EP-A1- 2 772 440
- EP-A1- 3 024 731
- FR-A1- 2 975 078
- US-A- 3 473 762
- US-A1- 2006 022 090

## Description

La présente invention se rapporte à une installation de contrôle de bagages dans un espace de transfert.

Un domaine d'application envisagé est notamment, mais non exclusivement, celui du contrôle de transfert des bagages dans une aérogare, entre l'enregistrement d'un bagage par le passager et la récupération du même bagage dans une autre aérogare après le vol par exemple.

Un traitement efficace du contrôle des bagages au sol avec un personnel en nombre minimal, permet de diminuer les coûts de transport unitaire.

Aussi, des installations de contrôle de bagages connues permettent d'impliquer les passagers dans l'acheminement de leurs bagages. Ces installations comprennent un bâti tubulaire comportant une pluralité de paires d'ouvertures latérales opposées, et pouvant accueillir une pluralité de conteneurs successifs venant respectivement au droit des paires d'ouvertures latérales. Le bâtit tubulaire présente une extrémité fermée et une extrémité ouverte. Il s'étend longitudinalement dans l'aérogare de manière à ce que l'extrémité ouverte débouche à l'extérieur, dans une zone réservée interdite au public, pour pouvoir recevoir les conteneurs.

Les conteneurs s'étendent généralement sur deux ou trois niveaux et ils présentent deux faces opposées ouvertes et une pluralité d'emplacements juxtaposés et superposés librement accessibles à travers les deux faces. Aussi, leur partie supérieure est plus large que leur partie inférieure pour pouvoir se conformer à la soute des avions.

Lorsque les conteneurs sont engagés successivement dans le bâti tubulaire, les emplacements sont alors librement accessibles à travers les ouvertures latérales du bâtit tubulaire.

Chaque passager, après qu'il a équipé son bagage d'un support d'enregistrement d'informations incluant son identité et les références du vol, et qu'il a satisfait aux contrôles en vigueur, vient charger son bagage dans l'emplacement d'un des conteneurs affecté au vol. Et un dispositif de localisation permet d'enregistrer la position du bagage dans le conteneur, tandis qu'un dispositif de lecture permet de lire simultanément le support d'enregistrement.

De la sorte, on connaît la position des bagages dans les conteneurs et l'identité des propriétaires.

Les conteneurs ainsi chargés de bagages sont destinés à être portés dans la soute des avions, puis, à destination, à en être extrait pour pouvoir être réinstallés le cas échéant, dans d'autres bâtis tubulaires selon une configuration identique. Les passagers pourront alors retrouver leur bagage à destination et les décharger des conteneurs.

On pourra se référer au document FR 2 975 078, lequel décrit une telle installation de contrôle des bagages.

Le dispositif de localisation alors mis en oeuvre, un émetteur récepteur sur le bâti et une étiquette RFID sur les bagages, est relativement complexe.

Aussi, un problème qui se pose et que vise à résoudre la présente invention est de fournir une installation de contrôle de bagages qui soit plus simple à mettre en oeuvre.

Dans ce but, il est proposé une installation de contrôle de bagages comprenant, d'une part un bâti tubulaire comportant une pluralité de paires d'ouvertures latérales opposées, ledit bâti tubulaire étant adapté à accueillir une pluralité de conteneurs successifs venant respectivement au droit des paires d'ouvertures latérales, chacun desdits conteneurs présentant deux faces opposées et une pluralité d'emplacements juxtaposés et superposés librement accessibles à travers lesdites deux faces opposées, chacun desdits emplacements étant adapté à recevoir un bagage muni d'un support d'enregistrement d'information contenant des informations relatives audit bagage ; et d'autre part un dispositif de localisation et un dispositif de lecture reliés à un organe d'enregistrement pour pouvoir enregistrer pour chacun desdits emplacements de chaque conteneur recevant un bagage, la position dudit emplacement dans ledit conteneur et lesdites informations relatives audit bagage. Ledit dispositif de localisation comprend des grilles de détection photoélectriques installées respectivement en travers desdites ouvertures latérales, et en ce que la position dudit emplacement dans ledit conteneur est enregistrée lorsque la grille de détection photoélectrique est traversée en regard dudit emplacement et que ledit dispositif de lecture lit ledit support d'enregistrement.

Ainsi, une caractéristique de l'invention réside dans la mise en oeuvre de grilles de détection photoélectriques en travers des ouvertures latérales des bâtis tubulaires pour pouvoir enregistrer la position et l'identification des bagages dans chacun des emplacements. Ces emplacements peuvent être compartimentés ou non. De la sorte, aucun dispositif mécanique n'est nécessaire pour situer le bagage lorsqu'il est chargé par le passager dans le conteneur. Comme on l'expliquera plus en détail dans la suite de la description, l'organe d'enregistrement fait partie d'un système plus complexe de contrôle et de commande.

Préférentiellement, lesdites grilles de détection photoélectriques comprennent une pluralité de premiers faisceaux électromagnétiques parallèles et une pluralité de seconds faisceaux électromagnétiques parallèles croisés avec les premiers faisceaux. Grâce aux premiers faisceaux électromagnétiques croisés avec les seconds faisceaux, dans le plan de chaque ouverture latérale, lorsqu'un bagage est introduit dans le conteneur, le passager vient alors couper certains premiers faisceaux et certains seconds faisceaux dans une portion du plan situé en regard de l'emplacement qui accueille ledit bagage. L'organe d'enregistrement enregistre ainsi la position de l'emplacement à l'intérieur du conteneur correspondant à l'interruption desdits certains faisceaux.

Selon une variante de réalisation particulièrement avantageuse, les premiers faisceaux électromagnétiques s'étendent verticalement, tandis que les seconds faisceaux électromagnétiques s'étendent horizontalement. Ainsi par exemple, une première rangée de cellules émettrices est installée verticalement dans la partie gauche de chacune des ouvertures latérales, et une première rangée de cellules réceptrices en regard est installée verticalement dans la partie droite de chacune desdites ouverture latérales. Aussi, une seconde rangée de cellules émettrices est installée horizontalement dans la partie supérieure de chacune desdites ouvertures latérales, et une seconde rangée de cellules réceptrices en regard est installée horizontalement dans la partie inférieure de chacune desdites ouverture latérales. Les cellules sont par exemple espacées les unes des autres sur chacune des rangées d'une distance comprise entre 1 cm et 10 cm, par exemple 4 cm.

En outre, ledit dispositif de lecture est mobile de façon à pouvoir être porté, par ledit porteur de bagage, en regard dudit support d'enregistrement dudit bagage pour lire ledit support d'enregistrement. Ainsi, le passager ou porteur de bagage, dépose son bagage dans un emplacement, et vient couper les faisceaux croisés situés en regard dudit emplacement, non seulement avec son bagage mais aussi avec ses mains et ses bras. Lorsque le bagage est en place, il saisit alors le dispositif de lecture à sa portée de manière à le porter précisément au voisinage du support d'enregistrement pour y lire les informations qu'il comporte. Ainsi, soit, les bras et/ou les mains du porteur du bagage ne cessent d'interrompre les faisceaux croisés, tandis qu'il saisit le dispositif de lecture pour lire les informations du support d'enregistrement, et auquel cas la continuité dans l'interruption des faisceaux permet d'associer la position du bagage et de l'emplacement dans le conteneur à la lecture des informations du support d'enregistrement. Soit les bras et/ou les mains du porteur de bagages ont cessé momentanément d'interrompre les faisceaux croisés pour pouvoir saisir le dispositif de lecture mobile et le porter au voisinage du support d'enregistrement du bagage en venant interrompre de nouveaux les faisceaux croisés au regard du bagage et de l'emplacement correspondant, et alors des paramètres temporels devront être considérés pour pouvoir associer la lecture du support d'enregistrement au bagage correspondant. On expliquera plus en détail dans la suite de la description les deux protocoles précités.

Par ailleurs, on observera que deux ou même trois passagers peuvent désirer charger leurs bagages simultanément dans le même conteneur. Aussi, pour éviter les erreurs de corrélation entre l'enregistrement des informations des supports d'enregistrement et les positions respectives des emplacements il est avantageux d'avoir un seul dispositif de lecture disponible par ouverture latérale. Au surplus, il est nécessaire que la position de l'intrusion du dispositif de lecture soit clairement identifiée pour pouvoir y associer la position du bagage et de l'emplacement dans le conteneur. Pour ce faire, et comme on l'expliquera plus en détail dans la suite de la description, des protocoles particuliers doivent être adoptés quant à la position de l'interruption des faisceaux croisés, et les temps d'interruption.

Préférentiellement le dispositif de lecture est un lecteur optique. Et aussi, le support d'enregistrement associé au bagage supporte des informations codées. Par exemple, le support d'enregistrement d'informations présente un code à barres ou bien encore un code matriciel.

En outre, et de façon particulièrement avantageuse, ledit organe d'enregistrement provoque le déclenchement d'une alarme lorsqu'il enregistre la seule traversée de la grille de détection photoélectrique en regard dudit emplacement sans enregistrer lesdites informations relatives audit bagage. Autrement dit, lorsqu'un bagage est engagé dans un emplacement par un passager sans que ce dernier ne prenne soin de veiller à la lecture du support d'enregistrement pour que les informations le concernant soient communiquées au système de contrôle de commande, l'installation se met en alarme. Alors, soit il remédie lui-même à cette anomalie et auquel cas, l'alarme cesse de fonctionner, soit un agent intervient pour vérifier qu'il ne s'agit pas d'une action volontaire malveillante.

De plus, ledit dispositif de lecture mobile provoque avantageusement le déclenchement d'une alarme lorsque ledit organe d'enregistrement enregistre lesdites informations relatives audit bagage avant d'enregistrer la traversée de la grille de détection photoélectrique. On vient s'assurer de la sorte que le passager a bien chargé son bagage dans le conteneur.

Par ailleurs, et selon un mode de mise en oeuvre de l'invention particulièrement avantageux, ledit organe d'enregistrement comporte une liste préenregistrée des informations relatives à tous les bagages, et ledit organe d'enregistrement compare les informations relatives à chaque bagage reçu dans chacun des emplacements aux informations relatives aux bagages de ladite liste préenregistrée. La liste préenregistrée des informations relatives aux bagages, comportant les références au vol et à l'identité du porteur de bagage est établie automatiquement en amont de l'installation lors des premières phases d'enregistrement et de contrôle de ceux-ci, et elle se transmet automatiquement à l'installation. Autrement dit, l'organe d'enregistrement rapproche les informations relatives aux bagages avec les données préenregistrées dans une base de données. Le système de contrôle et de commande de l'installation déclenche alors une alarme lorsque les informations relatives au bagage ne figurent pas dans la liste préenregistrée de la base de données. De la sorte, on vient s'assurer que tous les bagages déposés dans les emplacements des conteneurs ont bien fait l'objet d'un enregistrement préalable.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique en perspective d'une partie d'aérogare apte à recevoir l'objet de l'invention ;
[Fig. 2] est une vue schématique en perspective d'un élément de chargement des bagages ;
[Fig. 3] est une vue schématique en perspective montrant l'objet de l'invention installé dans la partie d'aérogare illustrée sur la figure [Fig. 1] ;
[Fig. 4] est une vue schématique en perspective d'une installation analogue à celle représentée sur la figure [Fig. 3] ;
[Fig. 5] est une vue schématique de face d'un élément de l'invention tel que représenté sur la figure [Fig. 3] ; et,
[Fig. 6] est un synoptique illustrant le fonctionnement de l'invention.

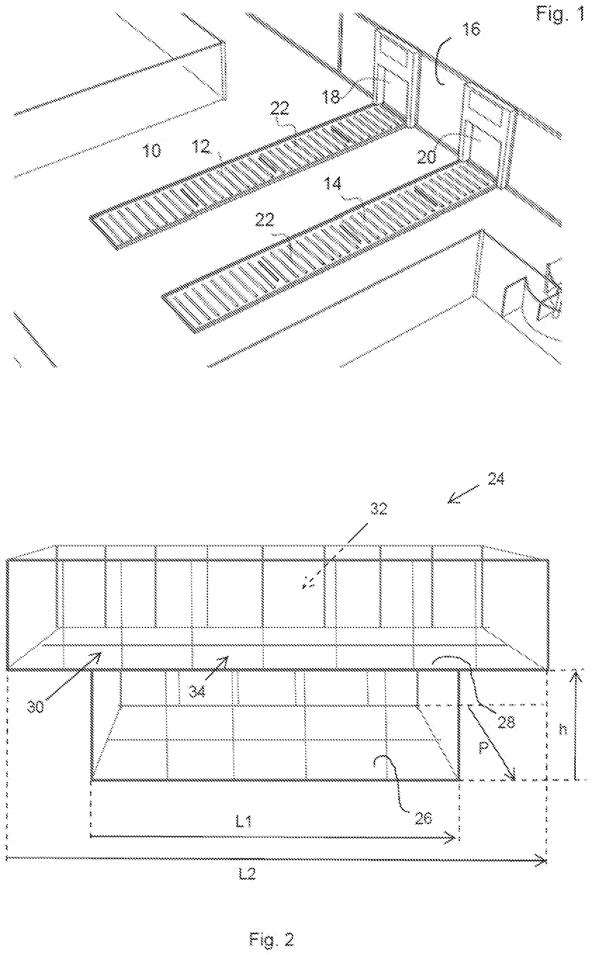

La Figure 1 montre schématiquement une partie 10 d'une aérogare présentant deux espaces de stockage longitudinaux 12, 14 autour desquels des passagers peuvent cheminer. Les deux espaces de stockage longitudinaux 12, 14 s'étendent ici longitudinalement et parallèlement l'un à l'autre, jusqu'à une paroi d'acheminement 16 percée de deux ouvertures 18, 20 respectivement dans le prolongement des espaces de stockage 12, 14. Aussi, les espaces de stockages longitudinaux 12, 14 sont respectivement équipés de cylindres de roulement 22 installés transversalement sensiblement à équidistance et parallèlement les uns par rapport aux autres. En outre, parmi les cylindres de roulement 22, certains sont des cylindres moteur. Préférentiellement, les cylindres de roulement 22 installés au droit des ouvertures 18, 20 sont des cylindres moteur pour des raisons que l'on expliquera ci-après.

On décrira maintenant en référence à la figure [Fig. 2] un conteneur 24, destiné précisément à être entraîné sur les espaces de stockages longitudinaux 12, 14 précités. Il présente deux plateformes de chargement superposées, une plateforme inférieure 26 et une plateforme supérieure 28 plus large. Le conteneur 24 est de forme générale tubulaire et il présente deux faces en T opposées l'une de l'autre, une première face 30 apparaissant en avant de la figure [Fig. 2] et une seconde face 32 apparaissant en arrière.

La plateforme inférieure 26 présente une première largeur L1, tandis que la plateforme supérieure 28 présente une seconde largeur L2 supérieure à la première, et le conteneur 24 présente une profondeur P. La première largeur L1 est de préférence comprise entre 1200 mm et 1700 mm, par exemple 1600 mm, et la seconde largeur L2, de préférence entre 2300 mm et 2700 mm, par exemple de 2438 mm. La profondeur P du conteneur 24 est comprise avantageusement entre 1000 mm et 1700 mm, elle est par exemple de 1534 mm. En outre, la plateforme supérieure 28, parallèle à la plateforme inférieure 26 en est écartée d'une distance h comprise entre 400 mm et 600 mm, et par exemple de 584mm, pour une hauteur totale de 1168 mm du conteneur.

Aussi, à l'intérieur du conteneur 24 sont ménagés des emplacements 34, cloisonnés ou non et débouchant respectivement dans les première et seconde faces 30, 32. Ainsi, dans l'exemple présenté sur la figure [Fig. 2] le conteneur 24 présente 2 × 5 emplacements inférieurs et 2 × 8 emplacements supérieures débouchant respectivement dans les première et seconde faces 30, 32.

Comme on l'expliquera ci-après, chaque emplacement 34 est ainsi adapté à recevoir un bagage, et partant, le conteneur 24 peut accueillir 26 bagages.

Il existe également des conteneurs de plus grande taille à pans coupés pour les gros-porteurs. Ces conteneurs présentent trois niveaux. Leur largeur est de 1534 mm, tandis que leur hauteur est de 1626 mm et leur longueur de 2007 mm. D'autres encore, avec ces mêmes dimensions excepté la longueur, présentent une longueur de 2337 mm.

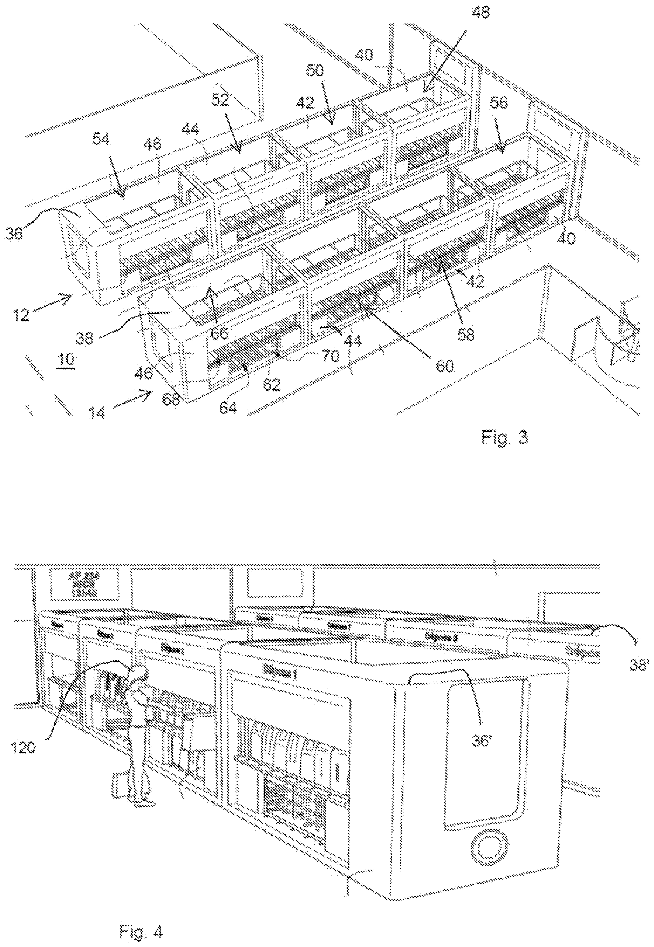

On se reportera maintenant à la figure [Fig. 3] sur laquelle on retrouve la partie 10 de l'aérogare et où les espaces de stockages longitudinaux 12, 14 sont respectivement recouverts de deux bâtis tubulaires 36, 38 formant tunnel.

Ces deux bâtis tubulaires 36, 38 sont respectivement constitués de quatre segments successifs 40, 42, 44, 46. Bien évidemment, il est envisagé différents bâtis tubulaires présentant des nombres de segments différents, inférieurs ou supérieurs.

Sur la Figure 3, ces quatre segments successifs reçoivent respectivement des conteneurs 48, 50, 52, 54 et 56, 58, 60, 62, du type du conteneur 24 illustré sur la figure [Fig. 2]. Pour ce faire, les conteneurs sont engagés successivement en enfilade, depuis l'extérieur, à travers les ouvertures 18, 20 et en appui sur les premiers cylindres moteur, de manière à ce qu'ils puissent y être entraînés en translation. Aussi, les derniers conteneurs entrant entraînent les précédents.

Aussi, chacun des segments 40, 42, 44, 46 présente deux ouvertures latérales opposées 64, 66, respectivement divisées en une ouverture supérieure large 68 et une ouverture inférieure étroite 70. L'ouverture supérieure large 68 est ouverte librement vers l'ouverture inférieure étroite 70.

La largeur de l'ouverture inférieure étroite 70 correspond sensiblement à la première largeur L1 de la plateforme inférieure 26 du conteneur 24, tandis que le la largeur de l'ouverture supérieure large 68 correspond sensiblement à la seconde largeur L2 de la plateforme supérieure 28.

Aussi, l'ouverture supérieure large 68 s'étend de chaque côté de l'ouverture inférieure étroite 70 d'une même amplitude. Aussi, la hauteur des ouvertures supérieure large 68 et inférieure étroite 70 est sensiblement égale à la distance h séparant les deux plateformes 26, 28 selon la direction verticale.

On observera que chacun des conteneurs 48, 50, 52, 54 et 56, 58, 60, 62 est logé dans un segment et que pour chacun d'entre eux, la plateforme supérieure 28 coïncide avec l'ouverture supérieure large 68 des ouvertures latérales 64, 66, tandis que la plateforme inférieure 26 coïncide avec l'ouverture inférieure étroite 70. Et plus généralement, pour chacun des conteneurs 48, 50, 52, 54 et 56, 58, 60, 62, les cinq emplacements 34 délimités par la plateforme inférieure 26 débouchent en regard de l'ouverture inférieure étroite 70, tandis que les huit emplacements 34 délimités par la plateforme supérieure 28 débouchent en regard de l'ouverture supérieure large 68.

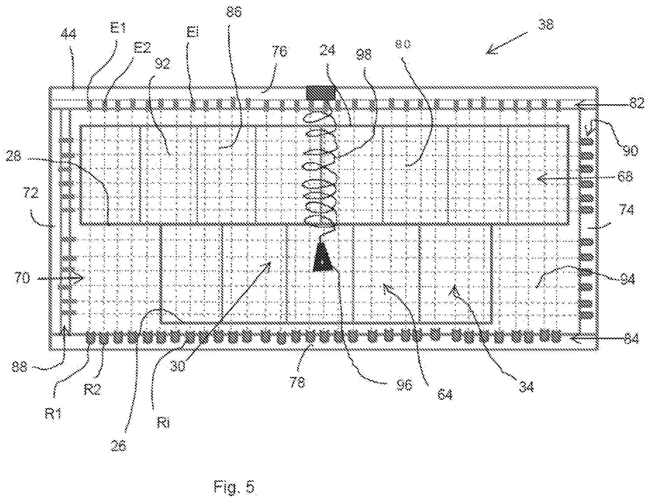

On se référera maintenant à la figure [Fig. 5] illustrant en détail et vu de face, une ouverture latérale 64 de l'un des bâtis tubulaires 38, et plus précisément de l'un des segments, 44 par exemple. En arrière de cette ouverture latérale 64 apparaît le conteneur 24 et sa première face 30. Aussi, on y retrouve les emplacements 34 débouchant tous en regard de l'ouverture 64. La seconde face du conteneur 24, opposée à la première face 30, vient elle, s'étendre en regard de l'ouverture latérale opposée du bâti tubulaire 38.

Chaque segment 40, 42, 44, 46 présente autour de chacune de ses ouvertures latérales 64, deux montants parallèles, un gauche 72 et un droit 74, reliés ensemble par une traverse supérieure 76 opposée à une traverse inférieure 78. Les montants 72, 74 et les traverses 76, 78 forment un cadre dans l'embrasure duquel est installée une grille de détection photoélectrique 80.

Ainsi, la traverse supérieure 76 comprend une rangée supérieure 82 de Eₙ émetteurs, tandis que la traverse inférieure 78 comprend une rangée inférieure 84 de Rₙ récepteurs. Chaque émetteur Eᵢ de la rangée supérieure 82 est orienté vers un récepteur unique Rᵢ correspondant de la rangée inférieure 84, de manière à ce que les axes optiques de l'émetteur Eᵢ et du récepteur R; soient confondus. On obtient de la sorte en l'espèce trente-deux faisceaux parallèles et verticaux 86 représentés en traits discontinus sur la figure [Fig. 5]. Les faisceaux parallèles verticaux 86 s'étendent sensiblement régulièrement d'un montant 72 à l'autre 74. Ils sont par exemple espacés les uns des autres d'une distance voisine de 80 mm.

En outre, l'un des montants 72 est équipé d'une rangée latérale 88 de Eₘ émetteurs, tandis que l'autre montant 74 est équipé d'une rangée latérale 90 de Rₘ récepteurs. Chaque émetteur Eᵢ de la rangée latérale d'émetteurs 88 est orienté vers un récepteur unique Rᵢ de la rangée latérale de récepteurs Rᵢ 90, de manière à ce que leurs axes optiques soient respectivement confondus. On obtient de la sorte et en l'espèce, six faisceaux parallèles supérieurs horizontaux 92 s'étendant en regard de l'ouverture supérieure large 68 et représentés en traits discontinus sur la figure [Fig. 5] et six faisceaux parallèles inférieurs horizontaux 94 s'étendant en regard de l'ouverture inférieure étroite 70. Les faisceaux horizontaux 92, 94 s'étendent sensiblement régulièrement de la traverse supérieure 76 à traverse inférieure 78.

De la sorte, au regard de chacun des emplacements 34 et au droit de l'ouverture latérale 64, statistiquement, viennent se croiser quatre faisceaux verticaux et six faisceaux horizontaux distincts. De la sorte, et comme on l'expliquera ci-après, quand un passager porteur de bagage vient opérer au niveau d'un emplacement 34, il fait nécessairement obstacle à une partie des 4x6 faisceaux croisées correspondants.

Par ailleurs, la traverse supérieure 76 est munie d'un boîtier de transmission auquel est raccordé un lecteur optique 96 au moyen d'un lien extensible 98.

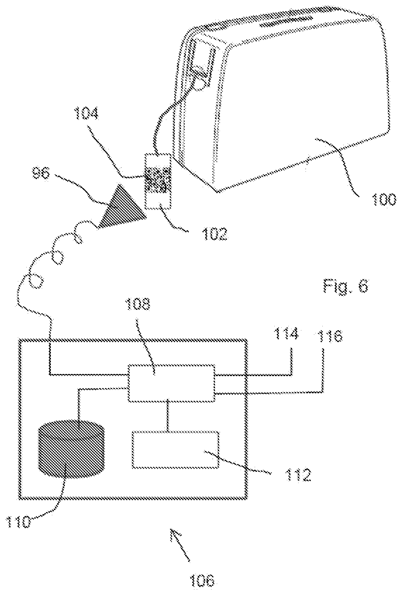

Aussi, on se reportera à présent en surplus de la figure [Fig. 5], à la figure [Fig. 6] laquelle fait apparaître de manière schématique, un bagage 100 auquel est attachée une étiquette 102 formant support d'information. Sur l'étiquette 102 est imprimé un QR code 104, incluant les informations relatives au bagage c'est-à-dire inhérentes au porteur du bagage et à sa destination. Sur cette figure apparaît également un système de contrôle et de commande 106. Ce dernier inclut un organe d'enregistrement 108, une base de données 110 et un organe de commande 112. En outre, le système de contrôle et de commande 106 est relié, d'une part, par une première ligne 114 aux rangées supérieure 82 et inférieure 84 d'émetteurs et de récepteurs, et d'autre part, par une seconde ligne 116 aux rangées latérales d'émetteurs 88 et de récepteurs 90, représentées sur la figure [Fig. 5]. De surcroît, le lecteur optique 96 est également relié au système de contrôle et de commande 106 via le boîtier de transmission précité.

De la sorte, un passager muni de son bagage enregistré et ayant satisfait la zone de contrôle, s'achemine vers l'un 38 des bâtis tubulaires 36, 38 et se présente en regard de l'ouverture latérale 64 du segment 44 représenté en détail sur la figure [Fig. 5]. Il porte par exemple son bagage 100 dans le troisième emplacement 34 en partant du montant gauche 72, sur la plateforme supérieure 28. Pour ce faire, il porte son bagage à travers la grille de détection photoélectrique 80, et il vient interrompre les faisceaux verticaux 86 et horizontaux 94 correspondant précisément à ce troisième emplacement. Ces informations sur la position de l'emplacement sont alors transmises à l'organe d'enregistrement 108 par l'intermédiaire des première 114 et seconde 116 lignes. Parallèlement, le passager saisit le lecteur optique 96 et franchit à nouveau la grille de détection photoélectrique 80 en regard dudit emplacement pour venir lire le QR code 104. En conséquence, concomitamment à la réception des informations de position, l'organe d'enregistrement 108 reçoit les informations relatives aux bagages et les y associe. De la sorte, la position du bagage dans le conteneur 24, et les informations d'identification du porteur sont enregistrées dans l'organe d'enregistrement 108. Il est ainsi possible de vérifier que le bagage déposé correspond bien au vol pour lequel il a été enregistré. Elles pourront alors être transmises à une aérogare d'arrivée de manière à ce que le passager puisse repérer et retirer son bagage, comme on l'expliquera ci-après.

Toutefois, si la séquence précitée, c'est-à-dire, traversée de la grille de détection photoélectrique 80, puis lecture d'un QR code, n'était pas respectée, alors, l'organe de commande 112 actionnerait une alarme. De telles circonstances naîtraient par exemple de la lecture préalable du QR code avant tout franchissement de la grille de détection photoélectrique 80. Ou bien encore de la lecture d'un QR code et de son rapprochement avec un emplacement préalablement enregistré. Dans ces conditions, un agent présent sur place pourrait intervenir pour vérifier que le bagage n'est pas suspect.

En outre, le système permet de gérer les cas où le passager traverse la grille de détection photoélectrique 80 au moyen du lecteur optique 96 pour lire son code, sans avoir libéré la grille de détection photoélectrique 80 au préalable et les cas où il la libère, lorsque le lecteur optique 96 est trop éloigné de lui. Dans ce dernier cas, on enclenche par exemple une temporisation entre l'instant où la grille 80 cesse d'être traversée et où elle est de nouveau traversée au même endroit pour venir lire le code. Ainsi, une alarme est déclenchée lorsque la temporisation expire sans que le code n'ait été enregistré.

Aussi, de façon particulièrement avantageuse, la base de données 110 est chargée des informations relatives à tous les bagages susceptibles d'être déposés. Partant, à chaque lecture d'un QR code au moyen du lecteur optique 96, une vérification est faite avec les informations de la base de données 110. Si la lecture ne correspond à aucun des passagers enregistrés, l'organe de commande 112 actionnerait l'alarme également. En cas d'erreur sur le lieu de dépose du bagage, le système pourrait avantageusement guider le passager vers le bon lieu de dépose.

Une telle base de données 110 permet également de vérifier que tous les bagages déposés correspondent à des passagers effectivement embarqués, d'identifier les bagages pour lesquels il n'y a pas de correspondance avec un passager embarqué, et de localiser l'emplacement et le conteneur. En outre, la base de données 110 permet de vérifier, le cas échéant, que tous les passagers qui ont satisfait l'étape de contrôle en amont, et dont le bagage a bien été enregistré et équipé de son support d'information, ont déposés leur bagage dans les conteneurs 24.

Chacun des emplacements 34 de tous les conteneurs 24 sont chargés de bagages selon la séquence précitée. Ou à tout le moins, l'essentiel de ces emplacements 34 sont chargés de bagages. Ensuite, les conteneurs 24 sont extraits longitudinalement des bâtis tubulaires pour pouvoir être chargés dans un avion. Puis l'avion effectue son vol jusqu'à destination avec à son bord les passagers.

A destination, les conteneurs de bagages sont déchargés de l'avion et sont engagés dans des bâtis tubulaires 36', 38', de l'aérogare de destination que l'on retrouve sur la figure [Fig. 4]. Ces bâtis tubulaires 36' ; 38' sont identiques à ceux de l'aérogare de départ. Et les conteneurs 24 y sont engagés selon une configuration identique. De la sorte, les passagers 120 peuvent alors aisément retrouver leur bagage, qu'ils extraient des emplacements des conteneurs.

Si le passager a oublié la position de l'emplacement de son bagage, le passager peut la retrouver en présentant son QR code à la lecture par tout lecteur mobile correspondant au vol. Une fois qu'il est devant le bon conteneur, une nouvelle lecture du QR code libère le bagage. Toute tentative de sortir le bagage sans libération préalable par la lecture du QR code déclenche une alarme.

## Revendications

1. Installation de contrôle de bagages comprenant :
- un bâti tubulaire (36, 38) comportant une pluralité de paires d'ouvertures latérales opposées (64, 66), ledit bâti tubulaire étant adapté à accueillir une pluralité de conteneurs successifs (24) venant respectivement au droit des paires d'ouvertures latérales (64, 66), chacun desdits conteneurs présentant deux faces opposées (30, 32) et une pluralité d'emplacements juxtaposés et superposés (34) librement accessibles à travers lesdites deux faces opposées, chacun desdits emplacements étant adapté à recevoir un bagage (100) muni d'un support d'enregistrement d'information (102) contenant des informations relatives audit bagage ;
- un dispositif de localisation (80) et un dispositif de lecture (96) reliés à un organe d'enregistrement (108) pour pouvoir enregistrer pour chacun desdits emplacements (34) de chaque conteneur (24) recevant un bagage, la position dudit emplacement (34) dans ledit conteneur (24) et lesdites informations relatives audit bagage ;
**caractérisée** en que ledit dispositif de localisation comprend des grilles de détection photoélectriques (80) installées respectivement en travers desdites ouvertures latérales (64, 66), et en ce que la position dudit emplacement (34) dans ledit conteneur (24) est enregistrée lorsque la grille de détection photoélectrique (80) est traversée en regard dudit emplacements (34) et que ledit dispositif de lecture (96) lit ledit support d'enregistrement (102).

2. Installation de contrôle selon la revendication 1, **caractérisée en ce que** lesdites grilles de détection photoélectriques (80) comprennent une pluralité de premiers faisceaux électromagnétiques parallèles (86) et une pluralité de seconds faisceaux électromagnétiques parallèles (92, 94) croisés avec les premiers faisceaux (86).

3. Installation de contrôle selon la revendication 2, **caractérisée en ce que** les premiers faisceaux électromagnétiques (86) s'étendent verticalement, tandis que les seconds faisceaux électromagnétiques (92, 94) s'étendent horizontalement.

4. Installation de contrôle selon l'une quelconque des revendications 1 à 3, **caractérisée en ce que** ledit dispositif de lecture (96) est mobile de façon à pouvoir être porté, par ledit porteur de bagage, en regard dudit support d'enregistrement (102) dudit bagage (100) pour lire ledit support d'enregistrement.

5. Installation de contrôle selon l'une quelconque des revendications 1 à 4, **caractérisée en ce que** ledit dispositif de lecture (96) est un lecteur optique.

6. Installation de contrôle selon la revendication 5, **caractérisée en ce que** ledit support d'enregistrement supporte des informations codée (104).

7. Installation de contrôle selon la revendication 6, **caractérisée en ce que** ledit support d'enregistrement (102) supporte un code matriciel (104).

8. Installation de contrôle selon l'une quelconque des revendications 1 à 7, **caractérisée en ce que** ledit organe d'enregistrement (108) provoque le déclenchement d'une alarme lorsqu'il enregistre la seule traversée de la grille de détection photoélectrique (80) en regard dudit emplacement (34) sans enregistrer lesdites informations relatives audit bagage.

9. Installation de contrôle selon l'une quelconque des revendications 1 à 8, **caractérisée en ce que** ledit dispositif de lecture mobile (96) provoque le déclenchement d'une alarme lorsque ledit organe d'enregistrement (108) enregistre lesdites informations relatives audit bagage avant d'enregistrer la traversée de la grille de détection photoélectrique (80).

10. Installation de contrôle selon l'une quelconque des revendications 1 à 9, **caractérisée en ce que** ledit organe d'enregistrement (108) comporte une liste préenregistrée (110) des informations relatives à tous les bagages, et **en ce que** ledit organe d'enregistrement compare les informations relatives à chaque bagage reçu dans chacun des emplacements aux informations relatives aux bagages de ladite liste préenregistrée.

## Patentansprüche

1. Gepäckkontrollanlage, umfassend:
- ein röhrenförmiges Gestell (36, 38), das eine Vielzahl von Paaren von gegenüberliegenden Seitenöffnungen (64, 66) enthält, wobei das röhrenförmige Gestell ausgelegt ist, eine Vielzahl von aufeinanderfolgenden Behältern (24) aufzunehmen, die jeweils im Bereich der Paare von Seitenöffnungen (64, 66) kommen, wobei jeder der Behälter zwei gegenüberliegende Seiten (30, 32) und eine Vielzahl von nebeneinander und übereinander angeordneten Stellplätzen (34) aufweist, die frei zugänglich durch die beiden gegenüberliegenden Seiten sind, wobei jeder der Stellplätze ausgelegt ist, ein Gepäckstück (100) aufzunehmen, das mit einem Informationsregistrierungsmedium (102) versehen ist, das Informationen bezüglich des Gepäckstücks beinhaltet;
- eine Ortungsvorrichtung (80) und eine Lesevorrichtung (96), die mit einem Registrierungsträger (108) verbunden sind, damit für jeden der Stellplätze (34) jedes Behälters (24), der Gepäckstücke aufnimmt, die Position des Stellplatzes (34) in dem Behälter (24) und die Informationen bezüglich des Gepäckstücks registriert werden kann;
**dadurch gekennzeichnet, dass** die Ortungsvorrichtung fotoelektrische Detektionsgitter (80) umfasst, die jeweils über den Seitenöffnungen (64, 66) installiert sind, und dass die Position des Stellplatzes (34) in dem Behälter (24) registriert wird, wenn das fotoelektrische Detektionsgitter (80) neben den Stellplätzen (34) durchquert wird, und dass die Lesevorrichtung (96) das Registrierungsmedium (102) liest.

2. Kontrollanlage nach Anspruch 1, **dadurch gekennzeichnet, dass** die photoelektrischen Detektionsgitter (80) eine Vielzahl von ersten parallelen elektromagnetischen Strahlenbündeln (86) und eine Vielzahl von zweiten parallelen elektromagnetischen Strahlenbündeln (92, 94) umfassen, die sich mit den ersten Strahlenbündeln (86) kreuzen.

3. Kontrollanlage nach Anspruch 2, **dadurch gekennzeichnet, dass** die ersten elektromagnetischen Strahlenbündel (86) sich vertikal erstrecken, während die zweiten elektromagnetischen Strahlenbündel (92, 94) sich horizontal erstrecken.

4. Kontrollanlage nach einem der Ansprüche 1 bis 3, **dadurch gekennzeichnet, dass** die Lesevorrichtung (96) derart mobil ist, dass sie dem Registrierungsmedium (102) des Gepäckstücks (100) zugewandt von dem Gepäckträger getragen werden kann, um das Registrierungsmedium zu lesen.

5. Kontrollanlage nach einem der Ansprüche 1 bis 4, **dadurch gekennzeichnet, dass** die Lesevorrichtung (96) ein optisches Lesegerät ist.

6. Kontrollanlage nach Anspruch 5, **dadurch gekennzeichnet, dass** das Registrierungsmedium codierte Informationen (104) trägt.

7. Kontrollanlage nach Anspruch 6, **dadurch gekennzeichnet, dass** das Registrierungsmedium (102) einen Matrixcode (104) trägt.

8. Kontrollanlage nach einem der Ansprüche 1 bis 7, **dadurch gekennzeichnet, dass** der Registrierungsträger (108) das Auslösen eines Alarms bewirkt, wenn er die einmalige Durchquerung des fotoelektrischen Detektionsgitter (80) neben dem Stellplatz (34) registriert, ohne die Informationen bezüglich des Gepäckstücks aufzuzeichnen.

9. Kontrollanlage nach einem der Ansprüche 1 bis 8, **dadurch gekennzeichnet, dass** die mobile Lesevorrichtung (96) das Auslösen eines Alarms bewirkt, wenn der Registrierungsträger (108) die Informationen bezüglich des Gepäckstücks registriert, bevor er die Durchquerung des photoelektrischen Detektionsgitters (80) registriert.

10. Kontrollanlage nach einem der Ansprüche 1 bis 9, **dadurch gekennzeichnet, dass** der Registrierungsträger (108) eine vorab registrierte Liste (110) von Informationen bezüglich aller Gepäckstücke enthält und dass der Registrierungsträger Informationen bezüglich jedes in jedem Stellplatz aufgenommenen Gepäckstücks mit Informationen bezüglich des Gepäckstücks der vorab registrierten Liste vergleicht.

## Claims

1. Luggage inspection installation comprising:
- a tubular frame (36, 38) comprising a plurality of pairs of opposed lateral openings (64, 66), said tubular frame being suitable for accommodating a plurality of successive containers (24) in line respectively with the pairs of lateral openings (64, 66), each of said containers having two opposing faces (30, 32) and a plurality of juxtaposed and superposed locations (34) that are freely accessible through said two opposing faces, each of said locations being suitable for receiving a piece of luggage (100) provided with an information recording medium (102) containing information relating to said piece of luggage;
- a locating device (80) and a reading device (96) linked to a recording member (108) to be able to record, for each of said locations (34) of each container (24) receiving a piece of luggage, the position of said location (34) in said container (24) and said information relating to said piece of luggage;
**characterized in that** said locating device comprises photoelectric detection grids (80) installed respectively across said lateral openings (64, 66), and **in that** the position of said location (34) in said container (24) is recorded when the photoelectric detection grid (80) is crossed opposite said locations (34) and said reading device (96) reads said recording medium (102).

2. The inspection installation as claimed in claim 1, **characterized in that** said photoelectric detection grids (80) comprise a plurality of first parallel electromagnetic beams (86) and a plurality of second parallel electromagnetic beams (92, 94) crossed with the first beams (86).

3. The inspection installation as claimed in claim 2, **characterized in that** the first electromagnetic beams (86) extend vertically, whereas the second electromagnetic beams (92, 94) extend horizontally.

4. The inspection installation as claimed in any one of claims 1 to 3, **characterized in that** said reading device (96) is mobile so as to be able to be carried, by said luggage carrier, opposite said recording medium (102) of said piece of luggage (100) to read said recording medium.

5. The inspection installation as claimed in any one of claims 1 to 4, **characterized in that** said reading device (96) is an optical reader.

6. The inspection installation as claimed in claim 5, **characterized in that** said recording medium supports coded information (104).

7. The inspection installation as claimed in claim 6, **characterized in that** said recording medium (102) supports a matrix code (104).

8. The inspection installation as claimed in any one of claims 1 to 7, **characterized in that** said recording member (108) provokes the triggering of an alarm when it records just the crossing of the photoelectric detection grid (80) opposite said location (34) without recording said information relating to said piece of luggage.

9. The inspection installation as claimed in any one of claims 1 to 8, **characterized in that** said mobile reading device (96) provokes the triggering of an alarm when said recording member (108) records said information relating to said piece of luggage before recording the crossing of the photoelectric detection grid (80).

10. The inspection installation as claimed in any one of claims 1 to 9, **characterized in that** said recording member (108) includes a prerecorded list (110) of the information relating to all the pieces of luggage, and **in that** said recording member compares the information relating to each piece of luggage received in each of the locations to the information relating to the pieces of luggage of said prerecorded list.
